(19) Europäisches Patentamt / European Patent Office / Office européen des brevets

(11) **EP 4 759 774 A1**

(12) **EUROPEAN PATENT APPLICATION**
published in accordance with Art. 153(4) EPC

(43) Date of publication:
**17.06.2026 Bulletin 2026/25**

(21) Application number: **24851711.2**

(22) Date of filing: **31.07.2024**

(51) International Patent Classification (IPC):
*C01F 11/18* (2006.01)    *C04B 14/28* (2006.01)

(52) Cooperative Patent Classification (CPC):
**C01F 11/18; C04B 14/28**

(86) International application number:
**PCT/JP2024/027359**

(87) International publication number:
**WO 2025/033286 (13.02.2025 Gazette 2025/07)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **10.08.2023 JP 2023131194**

(71) Applicant: **Konoshima Chemical Co., Ltd.**
**Osaka-shi, Osaka 541-0042 (JP)**

(72) Inventors:
• **MATSUI, Seiji**
  **Mitoyo-shi, Kagawa 769-1103 (JP)**
• **TAKENAKA, Hiroki**
  **Mitoyo-shi, Kagawa 769-1103 (JP)**
• **SATOMURA, Hideaki**
  **Mitoyo-shi, Kagawa 769-1103 (JP)**

(74) Representative: **Parker, Andrew James**
**Meissner Bolte Partnerschaft mbB**
**Patentanwälte Rechtsanwälte**
**Postfach 86 06 24**
**81633 München (DE)**

(54) **CALCIUM-BASED CARBONATE COMPOUND FOR INORGANIC MOLDED BODY**

(57) Provided is a calcium-based carbonate compound for an inorganic molded body capable of sufficiently reducing warpage and cracks during heating when used for an inorganic molded body as a building material. A calcium-based carbonate compound for an inorganic molded body, the calcium-based carbonate compound having: a calcite-type crystal structure, an aragonite-type crystal structure, or a combination of the crystal structures; an aspect ratio of an average major diameter to an average minor diameter, the aspect ratio being 2 or more and 19 or less; and an oil absorption of 40 mL/100 g or more and 90 mL/100 g or less.

FIG. 1

S4700 15.0kV 14.9mm x2.00k SE(M)    20.0um

**Description**

TECHNICAL FIELD

The present invention relates to a calcium-based carbonate compound for an inorganic molded body.

BACKGROUND ART

The inorganic molded body is a molded body mainly constituted by inorganic substances such as a hydraulic material and a siliceous material, having characteristics such as fire resistance, light weight, high strength, and workability, and therefore is widely used for an outer wall material of a house or the like, a roof base material, an eave soffit material, and the like.

On the other hand, due to the recent increase in environmental awareness, attempts have been made to reuse by-product materials and by-product energy such as waste material, exhaust gas, and waste heat secondarily generated in industrial processes.

As a technique for promoting the reuse of waste material while enhancing fire resistance, which is one of the important safety performances required for an inorganic molded body, a technique has been proposed in which a seawater residue mainly including calcium carbonate and magnesium hydroxide that are by-products in a process of removing carbonate in seawater in a process of producing magnesium hydroxide from seawater is applied as a calcareous material (JP 2012 - 116 685 A).

PRIOR ART DOCUMENT

PATENT DOCUMENT

Patent Document 1: JP 2012 - 116 685 A

SUMMARY OF THE INVENTION

PROBLEMS TO BE SOLVED BY THE INVENTION

However, even with the above technique, undesirable heating behavior such as warpage and cracks may occur during heating, and it is required to sufficiently suppress the heating behavior of the inorganic molded body as a building material.

Furthermore, carbon dioxide is being widely recognized as a warming gas, and reuse and emission reduction of carbon dioxide as a secondary product from industrial processes are urgent issues.

An object of the present invention is to provide a calcium-based carbonate compound for an inorganic molded body capable of sufficiently reducing warpage and cracks during heating when used for an inorganic molded body as a building material.

MEANS FOR SOLVING THE PROBLEMS

As a result of intensive studies, the present inventor has found that the above problem can be solved by the following configuration, and has completed the present invention.

The present invention relates to, in an embodiment,
a calcium-based carbonate compound for an inorganic molded body, the calcium-based carbonate compound having:

a calcite-type crystal structure, an aragonite-type crystal structure, or a combination of the crystal structures;
an aspect ratio of an average major diameter to an average minor diameter, the aspect ratio being 2 or more and 19 or less; and
an oil absorption of 40 mL/100 g or more and 90 mL/100 g or less.

The calcium-based carbonate compound for an inorganic molded body (hereinafter, also referred to as "calcium-based carbonate compound"), having a specific crystal structure, aspect ratio, and oil absorption, is capable of sufficiently reducing warpage and cracks during heating when used for an inorganic molded body. The reason for this is not clear, but is presumed as follows. The present inventors studied the cause of the heating behavior, and considered that the shrinkage degree of the heated surface is large, which may cause cracks at the heated surface. In addition, it was presumed that cracks at the heated surface triggered cracks and warpage in the entire inorganic molded body. Furthermore, it was found that the temperature is greatly increased at the back surface (surface opposite to the heated surface) during heating, and therefore temperature may be quickly transmitted from the heated surface to the back surface to generate thermal shock in the thickness direction, thereby leading to occurrence of warpage and cracks in the entire inorganic molded body. The present inventors further studied and found that when a calcium-based carbonate compound having a high aspect ratio is blended in the inorganic molded body, it is possible to suppress the shrinkage of the heated surface and the temperature increase at the back surface during heating, respectively. The calcium-based carbonate compound having a high aspect ratio serves as a so-called reinforcing material so that the shrinkage of the heated surface can be suppressed, and the occurrence of cracks can be prevented. In addition, it is possible to reduce the occurrence of warpage when thermal shock is generated. Furthermore, the calcium-based carbonate compound having low thermal conductivity is blended to enhance the heat insulating property in the thickness direction of the inorganic molded body, so that the temperature increase at the back surface can be suppressed to inhibit the generation of thermal shock. In addition, by using the calcium-based carbonate compound having a high oil absorption, the dispersibility and filling ability thereof in an inorganic molded body can be improved, and as a result, it is possible to suppress the shrinkage of the heated surface and the temperature increase at the back surface during heating, respectively, at higher level. It is presumed that warpage and cracks in the entire inorganic molded body can be prevented by their hybrid actions.

In the present specification, the "calcium-based carbonate compound" is a compound containing calcium carbonate as a main component, and is a concept that allows the inclusion or coexistence of other subcomponents that can be incorporated in the production process and the like. The content of calcium carbonate in the calcium-based carbonate compound is preferably 90 mass% or more. As the method for measuring the content percentage of calcium carbonate in the calcium-based carbonate compound, XRF (fluorescent X-ray analysis) can be suitably employed.

In an embodiment, the calcium-based carbonate compound preferably has an apparent specific gravity of 0.1 g/mL or more and 1.0 g/mL or less. Thereby, the dispersibility of the calcium-based carbonate compound in an inorganic molded body is improved, and it is possible to suppress the shrinkage of the heated surface and the temperature increase at the back surface during heating, respectively, at higher level.

In an embodiment, the calcium-based carbonate compound preferably has a mesopore volume of 0.018 mm$^3$/g or more and 0.045 mm$^3$/g. Thereby, the calcium-based carbonate compound can maintain the strength at the particle level regardless of the shape thereof, and efficiently suppress the shrinkage of the heated surface during heating when blended in an inorganic molded body.

In an embodiment, the calcium-based carbonate compound preferably has an average particle diameter by a laser diffraction method of 1.1 $\mu$m or more and 12.5 $\mu$m or less from the viewpoint of suppressing the shrinkage of the heated surface.

In an embodiment, the calcium-based carbonate compound preferably has an average major diameter in scanning electron microscope observation of 0.5 $\mu$m or more and 25 $\mu$m or less. In an embodiment, the calcium-based carbonate compound preferably has a BET specific surface area of 1 m$^2$/g or more and 10 m$^2$/g or less. When these are satisfied alone or in combination, it is possible to suppress the shrinkage of the heated surface and the temperature increase at the back surface during heating, respectively, at a higher level.

In an embodiment, the calcium-based carbonate compound is preferably a synthetic calcium-based carbonate compound. When a synthetic calcium-based carbonate compound that is a reaction product of calcium hydroxide and carbon dioxide gas (carbon dioxide) is used as the calcium-based carbonate compound, carbon dioxide secondarily generated in industrial processes can be reused to contribute to reduction of the emission of carbon dioxide in the entire industrial process.

BRIEF DESCRIPTION OF THE DRAWINGS

FIG. 1 is an SEM photograph of a calcium-based carbonate compound of Example 1-1 of the present invention.
FIG. 2 is an SEM photograph of a calcium-based carbonate compound of Example 1-2 of the present invention.
FIG. 3 is an SEM photograph of a calcium-based carbonate compound of Example 1-3 of the present invention.
FIG. 4 is an SEM photograph of a calcium-based carbonate compound of Comparative Example 1-1 of the present invention.
FIG. 5 is a partial perspective view schematically showing a heating tester.

MODE FOR CARRYING OUT THE INVENTION

The calcium-based carbonate compound for an inorganic molded body according to an embodiment of the present invention will be described below. The present invention is not limited to these embodiments.

Calcium-based carbonate compound for inorganic molded body

As the crystal structure of the calcium-based carbonate compound, a calcite type, an aragonite type, or a combination thereof can be suitably employed. From the viewpoint of giving the aspect ratio to the calcium-based carbonate compound, it is preferable to include at least an aragonite type crystal structure.

The aspect ratio of the average major diameter to the average minor diameter of the calcium-based carbonate compound is 2 or more and 19 or less, preferably 2.5 or more and 17 or less, and more preferably 3 or more and 15 or less. It has been found that it is possible to suppress the shrinkage of the heated surface and the temperature increase at the back surface during heating, respectively.

When the aspect ratio of the calcium-based carbonate compound is within the above range, the calcium-based carbonate compound having a high aspect ratio effectively serves as a reinforcing material, and the shrinkage of the heated surface and the temperature increase at the back surface are suppressed, so that warpage and cracks in the entire inorganic molded body can be prevented.

When the inorganic molded body is prepared by a papermaking method, the aspect ratio of the calcium-based carbonate compound is preferably 4 or more and 19, more preferably 6 or more and 18 or less, and still more preferably 8 or more and 17 or less.

When the inorganic molded body is prepared by an extrusion molding method, the aspect ratio of the calcium-based carbonate compound is preferably 2 or more and 12 or less, more preferably 2.5 or more and 10 or less, and still more preferably 3 or more and 8 or less.

The oil absorption of the calcium-based carbonate compound is preferably 40 mL/100 g or more and 90 mL/100 g or less, more preferably 45 mL/100 g or more and 80 mL/100 g or less, and still more preferably 50 mL/100 g or more and 70 mL/100 g or less. When the oil absorption of the calcium-based carbonate compound is within the above range, the dispersibility and filling ability of the calcium-based carbonate compound can be improved, and as a result, it is possible to suppress the shrinkage of the heated surface and the temperature increase at the back surface during heating, respectively, at higher level.

The apparent specific gravity of the calcium-based carbonate compound is preferably 0.1 g/mL or more and 1.0 g/mL or less, more preferably 0.2 g/mL or more and 0.9 g/mL or less, and still more preferably 0.3 g/mL or more and 0.8 g/mL or less. When the apparent specific gravity of the calcium-based carbonate compound is within the above range, the dispersibility of the calcium-based carbonate compound is improved in the inorganic molded body, and it is possible to suppress the shrinkage of the heated surface and the temperature increase at the back surface during heating, respectively, at a higher level.

In an embodiment, the mesopore volume of the calcium-based carbonate compound is preferably 0.018 $mm^3/g$ or more and 0.045 $mm^3/g$, more preferably 0.019 $mm^3/g$ or more and 0.042 $mm^3/g$, and still more preferably 0.020 $mm^3/g$ or more and 0.038 $mm^3/g$. Thereby, the calcium-based carbonate compound can maintain the strength at the particle level regardless of the shape thereof, and efficiently suppress the shrinkage of the heated surface during heating when blended in an inorganic molded body.

The average particle diameter of the calcium-based carbonate compound measured by a laser diffraction method is preferably 1.1 $\mu$m or more and 12.5 $\mu$m or less, more preferably 1.5 $\mu$m or more and 12 $\mu$m or less, and still more preferably 2 $\mu$m or more and 10 $\mu$m or less. Thereby, the dispersibility of the calcium-based carbonate compound can be improved, and the shrinkage of the heated surface can be efficiently suppressed.

The average major diameter in scanning electron microscope observation of the calcium-based carbonate compound is preferably 0.5 $\mu$m or more and 25 $\mu$m or less, more preferably 1 $\mu$m or more and 22 $\mu$m or less, and still more preferably 2 $\mu$m or more and 18 $\mu$m or less. Thereby, it is possible to suppress aggregation within the calcium-based carbonate compound or between the calcium-based carbonate compound and other components, and as a result, it is possible to suppress the shrinkage of the heated surface and the temperature increase at the back surface during heating, respectively, at a higher level.

The BET specific surface area of the calcium-based carbonate compound is preferably 1 $m^2/g$ or more and 10 $m^2/g$ or less, more preferably 2 $m^2/g$ or more and 9 $m^2/g$ or less, and still more preferably 3 $m^2/g$ or more and 8 $m^2/g$ or less. Thereby, the dispersibility of the calcium-based carbonate compound can be improved, and as a result, it is possible to suppress the shrinkage of the heated surface and the temperature increase at the back surface during heating, respectively, at a higher level.

In an X-ray diffraction measurement of the calcium-based carbonate compound, the ratio $I_a/I_c$ of the peak intensity $I_a$ of aragonite to the peak intensity $I_c$ of calcite is preferably 0.02 or more, more preferably 0.20 or more, and still more preferably 1.00 or more. This makes it possible to efficiently impart a high aspect ratio to the calcium-based carbonate compound, and reduce the occurrence of warpage and cracks in the inorganic molded body at a higher level.

The calcium-based carbonate compound is preferably a synthetic calcium-based carbonate compound. When a synthetic calcium-based carbonate compound that is a reaction product of calcium hydroxide and carbon dioxide gas (carbon dioxide) is used as the calcium-based carbonate compound, carbon dioxide secondarily generated in industrial processes can be reused to contribute to reduction of the emission of carbon dioxide in the entire industrial process.

In addition, the source of the calcium-based carbonate compound may be a seawater residue mainly including the calcium-based carbonate compound and magnesium hydroxide that are by-products in a process of removing carbonate in seawater in a process of producing magnesium hydroxide from seawater.

Method for producing calcium-based carbonate compound

The method for synthesizing the calcium-based carbonate compound is not particularly limited, and a known production method can be employed. Typically, preferable is the carbon dioxide gas method, in which carbon dioxide gas is blown into milk of lime (a slurry in which slaked lime is further excessively added to a saturated aqueous solution of slaked lime) for carbonization. As the carbon dioxide gas used in the carbon dioxide gas method, flue exhaust gas from a lime firing furnace installed in the vicinity of the production plant of the calcium-based carbonate compound, and exhaust gas from a boiler, a refuse incinerator, and the like can be used.

As a method for imparting a predetermined aspect ratio to the calcium-based carbonate compound based on the carbon dioxide gas method, a known method can also be employed. Specific examples of the method include: a method for producing a calcium-based carbonate compound in which the amount of carbon dioxide gas is adjusted in each stage in the carbonation step; a method for producing a calcium-based carbonate compound in which heating is performed in the carbonation stage; a method for producing a calcium-based carbonate compound in which an acicular light calcium-based carbonate compound is used as a seed crystal in a slaked lime slurry, and carbon dioxide gas is introduced into the slurry to grow the seed crystal to a desired particle size through a carbonation reaction; a method for producing a calcium-based carbonate compound in which an aragonite-based acicular calcium-based carbonate compound is added to a slaked lime slurry, and the slurry is stirred with high stirring power to perform a carbonation reaction; a method for producing an aragonite crystal-type calcium-based carbonate compound in which a phosphate compound is added; a method for producing a calcium-based carbonate compound in which a sulfate compound is added to obtain a spindle calcium-based carbonate compound; a method for producing an aragonite crystal-type calcium-based carbonate compound in which a slaked lime slurry prepared with an alkaline aqueous solution is used; and a method for producing an aragonite-type calcium-based carbonate compound in which a slaked lime slurry prepared with water containing magnesium ions is used. By using these methods alone or in combination of two or more, a calcium-based carbonate compound including an aragonite-type crystal structure can be efficiently produced.

Among them, the method for producing the calcium-based carbonate compound having a high aspect ratio and oil absorption is preferably a method for producing a calcium-based carbonate compound in which an acicular synthetic calcium-based carbonate compound having an aragonite-type crystal structure is used as a seed crystal in a slaked lime slurry, and carbon dioxide gas is introduced into the slurry to grow the seed crystal to a desired particle size through a carbonation reaction (hereinafter, also referred to as "seed crystal method").

In the seed crystal method, the blending amount of the seed crystal is preferably 1 part by mass or more and 30 parts by mass or less, more preferably 5 parts by mass or more and 20 parts by mass or less, and still more preferably 8 parts by mass or more and 15 parts by mass or less, based on 100 parts by mass of the slaked lime (in terms of CaO).

In the seed crystal method, the concentration of the carbon dioxide gas varies depending on the type of exhaust gas generated from each combustion engine, and is preferably 1 vol% or more, more preferably 5 vol% or more, and still more preferably 10 vol% or more in consideration of carbonation efficiency. In consideration of carbonation efficiency and production capacity, the flow rate of the carbon dioxide gas is preferably 10 L/min or more and 200 L/min, more preferably 30 L/min or more and 150 L/min, and still more preferably 60 L/

min or more and 120 L/min, per 10 kg of the charged raw material CaO content.

In the seed crystal method, the carbonation temperature (the slurry temperature) is preferably 40 °C or higher and 100 °C or lower, more preferably 50 °C or higher and 90 °C or lower, and still more preferably 60 °C or higher and 80 °C or lower.

In the seed crystal method, it is preferable to proceed with carbonation in the presence of a phosphate. The phosphate is not particularly limited, and examples thereof include phosphoric acid, sodium dihydrogen phosphate anhydride, sodium dihydrogen phosphate monohydrate, sodium dihydrogen phosphate dihydrate, disodium hydrogen phosphate 12-hydrate, potassium dihydrogen phosphate anhydride, and ammonium dihydrogen phosphate anhydride.

In the seed crystal method, the blending amount of the phosphate is preferably 1 part by mass or more and 25 parts by mass or less, more preferably 4 parts by mass or more and 18 parts by mass or less, and still more preferably 6 parts by mass or more and 12 parts by mass or less, based on 100 parts by mass of the slaked lime (in terms of CaO).

When a high aspect ratio is not required, the calcium-based carbonate compound can be produced without blending a seed crystal or a phosphate.

The produced calcium-based carbonate compound may be collected by filtration and dried to form a powder, or may be used as a calcium-based carbonate compound source in a slurry or cake form without undergoing collection by filtration and drying.

Other than the carbon dioxide gas method, when slaked lime or the like is added to seawater to produce magnesium hydroxide, the residue from which magnesium has been removed (hereinafter, referred to as "utilized water") is added with an alkali agent such as magnesium hydroxide, and carbon dioxide gas is blown thereinto, which is the utilized water method. The method is also preferable from the viewpoint of utilizing waste material and reducing carbon dioxide. Further, as described above, the source of the calcium-based carbonate compound may be a seawater residue mainly including the calcium-based carbonate compound and magnesium hydroxide that are by-products in a process of removing carbonate in seawater in a process of producing magnesium hydroxide from seawater.

Inorganic molded body

The inorganic molded body preferably contains a hydraulic material, a siliceous material, a reinforcing fiber material, and a calcium-based carbonate compound having a predetermined aspect ratio and an oil absorption.

Hydraulic material

Examples of the hydraulic material include cementitious materials, gypsum, lime, slag, and the like. The cementitious materials include commonly used cements such as ordinary Portland cement, early-strength cement, medium heat cement, fly ash cement, blast furnace slag cement, and alumina cement. Examples of the gypsum include anhydrous gypsum, hemihydrate gypsum, and dihydrate gypsum. Examples of the slag include blast furnace slag and converter slag. These hydraulic materials can be used alone or in combination of two or more thereof.

The content of the hydraulic material is preferably 5 mass% or more and 45 mass% or less, more preferably 8 mass% or more and 42 mass% or less, still more preferably 10 mass% or more and 40 mass% or less, based on the total amount of the materials constituting the inorganic molded body. Adjusting the content of the hydraulic material within the above range can improve physical properties such as bending strength and peeling strength of the inorganic molded body, and can suppress an increase in bulk specific gravity of the inorganic molded body and enhance workability at the time of construction, and the like.

Siliceous material

Examples of the siliceous material include materials containing a large amount of $SiO_2$, such as quartz sand, quartz powder, silica fume, fly ash, diatomaceous earth, layered silicate (e.g. mica, talc, kaolin, bentonite), pearlite, wollastonite, and lightweight aggregate (for example, fly ash balloon, pearlite, shirasu balloon, glass foam, and the like). These siliceous materials can be used alone or in combination of two or more thereof. Talc, mica, and wollastonite can also be used as a reinforcing fiber material described later.

The content of the siliceous material is preferably 10 mass% or more and 55 mass% or less, more preferably 12 mass% or more and 50 mass% or less, still more preferably 15 mass% or more and 45 mass% or less, based on the total amount of the materials constituting the inorganic molded body. When the content of the siliceous material is within the above range, the bending strength, bulk specific gravity, water absorption rate, dimensional stability, and the like of the inorganic molded body can be adjusted within a desired range.

Note that when a lightweight aggregate having a unit volume mass of 0.5 g/cm³ or less such as pearlite, fly ash balloon, or shirasu balloon is blended as the siliceous material, in order to prevent the bulk specific gravity from becoming too light and the strength such as bending strength and peeling strength from becoming weak, it is preferable to use another siliceous material in combination such that the content of the lightweight aggregate is 20 mass% or less based on the total amount of the materials constituting the inorganic molded body.

Reinforcing fiber material

As the reinforcing fiber material, for example, pulps such as softwood pulp, hardwood pulp, pulp obtained by fibrillating these pulps, and pulp obtained by defibrating waste paper, organic reinforcing fiber materials such as vinylon fiber, acrylonitrile fiber, and polypropylene fiber, and inorganic reinforcing fiber materials such as rock wool and glass fiber can be used. These reinforcing fiber materials can be used alone or in combination of two or more thereof.

In order to improve the strength of and impart toughness to the inorganic molded body, the content of the reinforcing fiber material is preferably 2 mass% or more and 30 mass% or less, more preferably 3 mass% or more and 26 mass% or less, still more preferably 4 mass% or more and 22 mass% or less, based on the total amount of the materials constituting the inorganic molded body. Adjusting the content of the reinforcing fiber material within the above range can suppress protrusion of fibers on the surface of the inorganic molded body and improve smoothness while exhibiting a sufficient reinforcing effect.

When an inorganic reinforcing fiber material having an average length of 1 mm to 50 mm is blended as the reinforcing fiber material, in order to improve the smoothness of the inorganic molded body, it is preferable to use another reinforcing fiber material in combination such that the content is 10 mass% or less based on the total amount of the materials constituting the inorganic molded body.

Calcium-based carbonate compound

As the calcium-based carbonate compound, the calcium-based carbonate compound for an inorganic molded body described above can be suitably employed.

The content of the calcium-based carbonate compound is preferably 5 mass% or more and 60 mass% or less, more preferably 8 mass% or more and 55 mass% or less, and still more preferably 12 mass% or more and 50 mass% or less based on the total mass of the materials constituting the inorganic molded body. The calcium-based carbonate compound having low thermal conductivity is blended within the content range to enhance the heat insulating property in the thickness direction of the inorganic molded body, so that the temperature increase at the back surface can be suppressed to inhibit the generation of thermal shock. As a result, warpage and cracks in the entire inorganic molded body can be prevented.

Optional components

In order to impart various functions to the inorganic molded body, in addition to the above materials, various materials such as a resin hollow body, wood pieces, wood powder, resin powder, an antifoaming agent, a coagulant, a water repellent, a thickener (methyl cellulose, hydroxyethyl methyl cellulose, hydroxypropyl methyl cellulose, and the like), and a dispersant can be blended depending on the purpose. In addition, it is also possible to appropriately add a recycled material obtained by grinding an end material or the like generated when processing the inorganic molded body.

Method for producing inorganic molded body

The method for producing the inorganic molded body according to the present embodiment is not particularly limited, and commonly used papermaking methods, extrusion molding methods, flow-on forming methods, cast molding methods, press (compression) molding, and the like can be used. The inorganic molded body can be obtained by subjecting a green sheet formed by these methods to a pattern forming process performed by press dehydration, embossing, or the like, followed by curing such as normal temperature curing, steam curing, or autoclave curing. Furthermore, drying is performed, and shape processing or coating may be performed as necessary.

Application of inorganic molded body

The application of the inorganic molded body is not particularly limited, and the inorganic molded body can be suitably used as performance maintaining materials, for example, interior and exterior finishing materials such as a building wall material, a floor material, a roof material, various boards, an external decorative member, and a fitting, sealing materials, heat insulating materials, sound absorbing materials, and waterproof materials. The inorganic molded body is preferably a cementitious inorganic molded body containing a cementitious material, and more preferably a calcium silicate formed body. The molded body is more preferably a molded plate.

The inorganic molded body may be a concrete building. A concrete building is composed of a cured body of a hydraulic composition. The hydraulic composition contains, in addition to calcium carbonate, a powder including at least one of blast furnace slag, swelling material, slaked lime, quicklime, fly ash, and cement material. As the calcium carbonate, the calcium-based carbonate compound described above can be suitably employed. As the cement material, the cement materials shown in the hydraulic material can be suitably employed.

In addition to the hydraulic composition, an aggregate such as sand or gravel, a chemical agent such as a chemical admixture for concrete, a fiber material made of a metal or a polymer material, or the like may be blended to provide a hydraulic composition mixed material.

The cured product of the hydraulic composition is obtained by curing a paste obtained by kneading water with the hydraulic composition. The cured product of the hydraulic composition mixed material, which is obtained by curing a kneaded product (corresponding to fresh mortar or fresh concrete) obtained by kneading water with the hydraulic composition mixed material, corresponds to mortar or concrete.

EXAMPLES

Hereinafter, a detailed description is made of the present invention with reference to Examples, but the present invention is not limited to the following Examples as long as the present invention does not exceed the gist of the present invention. Measurement and evaluation of physical properties and the like were performed as follows.

Evaluation of calcium-based carbonate compound

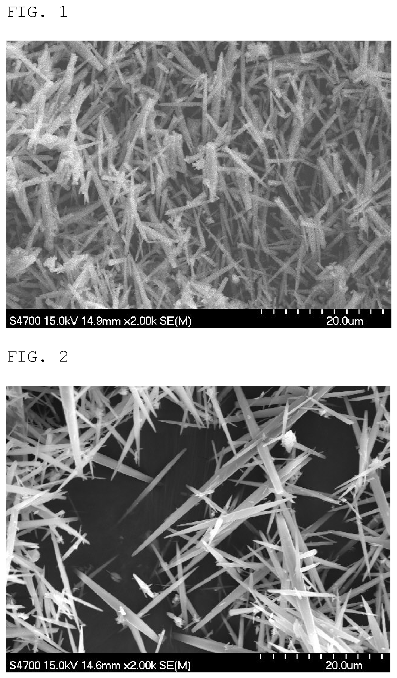

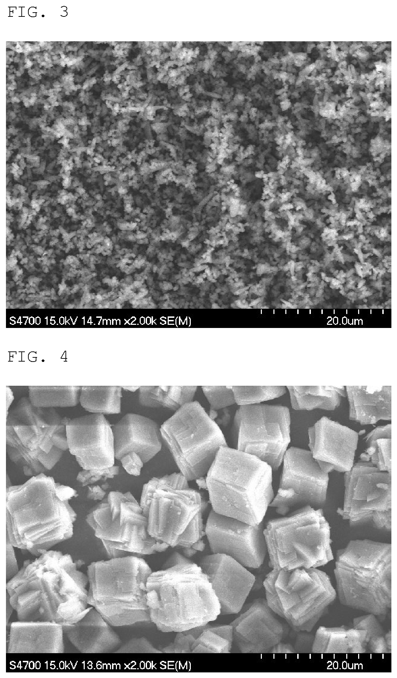

The calcium-based carbonate compounds and the like obtained in Production Examples were subjected to the following analysis. The analysis results are shown in Table 1 and FIGS. 1 to 4.

(1) BET specific surface area

The BET specific surface area ($m^2$/g) of a sample powder pretreated at about 130 °C for about 30 minutes in a nitrogen gas atmosphere using an 8-unit preheat unit (manufactured by MOUNTECH) was measured by a nitrogen gas adsorption method using Macsorb HM Model-1208 (manufactured by MOUNTECH) as a BET specific surface area measuring apparatus.

(2) Average particle diameter measured by laser diffraction method

In a 100 mL volume beaker, 50 mL of ethanol was placed, and about 0.2 g of the sample powder was put into the 100 mL volume beaker, followed by ultrasonic treatment (UD-201 manufactured by Tomy Seiko Co., Ltd.) for 3 minutes, to prepare a dispersion. The dispersion was measured using a laser diffraction method-particle size distribution meter (Microtrac HRA Model 9320-X100 manufactured by Nikkiso Co., Ltd.) with a volume-based $D_{50}$ value as the average particle diameter ($\mu$m).

(3) Calculation of ratio of 46° (aragonite) peak intensity $I_a$ to 29° (calcite) peak intensity $I_c$ in XRD measurement

The sample powder was pressure-adhered to a predetermined sample stage with a spatula, followed by measurement using an XRD apparatus (MiniFlex 600-C manufactured by Rigaku Corporation) to perform identification analysis as a crystalline material. In the measurement angle 2θ, the peak appearing at about 29° is the main peak of calcite, and the peak appearing at about 46° is the main peak of aragonite. From this, the ratio ($I_a/I_c$) of 46° (aragonite) peak intensity $I_a$ to 29° (calcite) peak intensity $I_c$ was determined.

(4) Calculation of average major diameter, average minor diameter, and aspect ratio by scanning electron microscope observation

A double-sided tape was attached onto an aluminum sample stage, and on the tape the sample powder was applied by tracing with a spatula. After platinum vapor deposition was performed, a particle image of the sample powder was photographed at a magnification of 5000 using a scanning electron microscope (FE-SEM: S-4700 manufactured by Hitachi, Ltd.). FIGS. 1 to 4 show SEM photographs. For the obtained SEM photographs, 20 particles in the photograph were randomly selected using image analysis software (Image J) to determine the average values of the major diameter, minor diameter, and aspect ratio (ratio of major diameter to minor diameter) of the primary particle, respectively. Specifically, the major diameter and the minor diameter were measured by the following procedure.
For one randomly selected particle image, the length of a straight line that gives the maximum diameter thereof was defined as "major diameter"; and at the center of the straight line that gives the major diameter (major diameter axis), a straight line orthogonal to the major diameter axis had a diameter on the particle image, which is defined as "minor diameter".

(5) Apparent specific gravity

The apparent specific gravity of the sample powder was measured in accordance with JIS K 6220.

(6) Oil absorption

After 2.00 g of the sample powder is collected and placed on a watch glass, dioctyl phthalate (DOP) put in a burette is dropped thereto drop by drop, during which the sample powder is kneaded with a spatula. When the aggregated and solidified sample is sharply softened upon adding one drop, the addition is stopped. The amount of oil (mL) used until final solidification is determined, and the oil absorption per 100 g of the sample is calculated by the following formula.

$$A = V \div S \times 100$$

Here, A is an oil absorption (mL/100 g), V is an amount of oil used until solidification (mL), and S is a sample amount (g).

(7) Mesopore volume

The mesopore volume was measured by the nitrogen adsorption method. First, as a pretreatment, vacuum degassing was performed at 120 °C for 8 hours using BELPREP-vacII (manufactured by MicrotracBEL Corp.). Next, using BELSORP-miniII (manufactured by MicrotracBEL Corp.), an adsorption/desorption isotherm with nitrogen was measured in accordance with the constant volume method. The measurement conditions were as follows. Finally, the mesopore volume was calculated by the BJH method. In the BJH method, a pore diameter of about 3.4 nm to about 200 nm was analyzed.

Measurement conditions

Adsorption temperature: 77 K
Saturated vapor pressure: Measured value
Adsorbate cross-sectional area: 0.162 nm$^2$
Adsorbate: Nitrogen
Equilibrium waiting time: 500 sec*1
*1: Waiting time after reaching an adsorption equilibrium state (a state in which pressure change at the time of adsorption and desorption is equal to or less than a predetermined value)

Production of calcium-based carbonate compound

[Example 1-1] Calcium-based carbonate compound (aspect ratio: 10.4)

Into a 220 L volume SUS container with a baffle plate in which 180 L of water was placed in advance, 6980 g of slaked lime powder in terms of CaO, 630 g of aragonite seed crystal powder, and 500 g of disodium hydrogen phosphate 12-hydrate were each charged under stirring to prepare a mixed slurry of raw materials. Thereafter, the temperature was raised to 70 °C, and under that temperature, stirring was performed at a rotation speed of 150 rpm using a stirrer equipped with one stage of turbine blades.
An exhaust gas extraction pipe was connected to an exhaust outlet of a steam production boiler using LNG as a fuel. Then, the $CO_2$ concentration was measured with a $CO_2$ concentration measuring device (XP-3140 manufactured by New Cosmos Electric Co., Ltd.) while the exhaust gas was drawn using a test blower. As a result, the $CO_2$ concentration was 10 vol%. The exhaust gas was introduced into the 220 L volume SUS container at a speed of 100 L/min using a test blower and reacted for 7 hours. Thereafter, the mixture was filtered, washed with water having a volume of about 5 times the solid content, and dried and ground at 110 °C for 24 hours to yield a sample powder of the calcium-based carbonate compound.

[Example 1-2] Calcium-based carbonate compound (aspect ratio: 18.2)

A sample powder of the calcium-based carbonate compound was obtained by the same operation as in Example 1-1 except that 3400 g of milk of lime in terms of CaO, 310 g of the product obtained in Example 1-1 as an aragonite seed crystal, and 240 g of disodium hydrogen phosphate 12-hydrate were used.

[Example 1-3] Calcium-based carbonate compound (aspect ratio: 2.7)

A sample powder of the calcium-based carbonate compound was obtained by the same operation as in Example 1-1 except that 7170 g of milk of lime in terms of CaO was prepared, but the aragonite seed crystal and disodium hydrogen phosphate 12-hydrate were not added, and the temperature at the reaction was 40 °C.

[Comparative Example 1-1] Calcium-based carbonate compound (aspect ratio: 1.2)

Into a 220 L volume SUS container with a baffle plate in which 100 L of water was placed in advance, 5940 g of a reagent of sodium carbonate (manufactured by Wako Pure Chemical Industries, Ltd.: purity 99.8%) was charged under stirring to prepare an aqueous solution of sodium carbonate. On the other hand, 1000 L of water was placed in a 2000 L volume polyethylene container, and 6940 g of a reagent of calcium chloride (manufactured by Wako Pure Chemical Industries, Ltd.: purity 95%) was charged thereto under stirring to prepare an aqueous solution of calcium chloride ($Ca^{2+}$ content: 0.25 g/dL).

Thereafter, a sample powder of the calcium-based carbonate compound was obtained by the same operation as in Example 1-1 except that 100 L of the above-described aqueous solution of sodium carbonate was added at once to the aqueous solution of calcium chloride under stirring, and then stirring was continued for about 30 minutes to react them.

[Table 1]

|  | Example 1-1 | Example 1-2 | Example 1-3 | Comparative Example 1-1 |
|---|---|---|---|---|
| BET specific surface area ($m^2/g$) | 3.7 | 2.8 | 5.5 | 1.9 |
| Average particle diameter ($\mu m$) | 4.1 | 7.3 | 3.1 | 10.4 |
| Average major diameter ($\mu m$) | 16.6 | 21.8 | 0.8 | 11.1 |
| Average minor diameter ($\mu m$) | 1.6 | 1.2 | 0.3 | 9.1 |
| Aspect ratio (-) | 10.4 | 18.2 | 2.7 | 1.2 |
| XRD measurement 46° (aragonite)/29° (calcite) ratio (Ia/Ic) | 25504/10121 = 2.52 | 37303/6629 = 5.63 | 0/47214 = 0 | 1092/88969 = 0.01 |
| Apparent specific gravity (g/mL) | 0.45 | 0.44 | 0.54 | 1.14 |
| Oil absorption (mL/100g) | 52 | 63 | 53 | 35 |
| Mesopore volume ($mm^3/g$) | 0.031 | 0.020 | 0.037 | 0.016 |

Production of inorganic molded body

An inorganic molded body was produced by a papermaking method and an extrusion molding method according to the following procedure. The blending amounts of the components used are all indicated as "parts by mass" unless otherwise specified. In the tables below, "-" indicates that the corresponding component was not used.

[Production Example 1-1] Production of inorganic molded body by papermaking method

Materials shown in Table 2 below were put into a poly container and stirred and mixed to obtain a raw material slurry. As the calcium-based carbonate compound, the calcium-based carbonate compound of Example 1-1 was used. The raw material slurry was dividedly charged into a filter covered with felt, performing suction filtration with a vacuum pump, to prepare a laminate (long side 28 mm × short side 24 mm × thickness 14 mm). The laminate was taken out of the filter and subjected to dehydration pressing. The thickness after pressing was 13 mm. After autoclave curing (curing pressure (gauge pressure): 9 kgf; curing time: 12 hr), the pressed body was dried in a dryer (105 °C) for 24 hr. Both surfaces thereof were polished with a sander to adjust the thickness to 12 mm, thereby obtaining an inorganic molded body.

[Production Example 1-2] Production of inorganic molded body by papermaking method

An inorganic molded body was obtained in the same manner as in Production Example 1-1 except that the calcium-based carbonate compound of Example 1-2 was used as the calcium-based carbonate compound.

[Production Example 1-3] Production of inorganic molded body by papermaking method

An inorganic molded body was obtained in the same manner as in Production Example 1-1 except that the calcium-based carbonate compound of Example 1-3 was used as the calcium-based carbonate compound.

[Comparative Production Example 1-1] Production of inorganic molded body by papermaking method

An inorganic molded body was obtained in the same manner as in Production Production Example 1-1 except that the calcium-based carbonate compound of Comparative Example 1-1 was used as the calcium-based carbonate compound.

[Comparative Production Example 1-2] Production of inorganic molded body by papermaking method

An inorganic molded body was obtained in the same manner as in Production Example 1-1 except that materials shown in Table 2 below were used and the calcium-based carbonate compound was not blended.

[Comparative Production Example 1-3] Production of inorganic molded body by papermaking method

An inorganic molded body was obtained in the same manner as in Production Example 1-1 except that a calcium-based carbonate compound having an aspect ratio of 25 was used as the calcium-based carbonate compound. However, the calcium-based carbonate compound was broken during molding and could not maintain the original shape, and therefore evaluation was not performed.

[Production Examples 1-4 to 1-10] Production of inorganic molded body by papermaking method

Inorganic molded bodies were obtained in the same manner as in Production Example 1-1 except that materials shown in Table 3 below were used. In Table 3, materials and evaluations of Production Examples 1-1 to 1-3 and Comparative Production Example 1-2 are also shown together for reference.

Evaluation of inorganic molded body

The inorganic molded bodies produced by a papermaking method in Production Examples and Comparative Production Examples were evaluated as follows. The results are shown in Tables 2 and 3.

Bulk density

The bulk density was measured in accordance with JIS A 5430.

Heating test

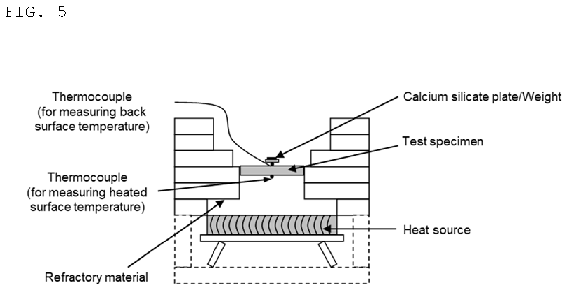

A heating test was performed by the following apparatus and procedure. FIG. 5 is a partial perspective view schematically showing a heating tester. As shown in FIG. 5, to stabilize the temperature at around 900 °C using an electric heater as a heat source, a refractory material was provided from the test specimen to the heat source, by which the temperature of the back surface of the test specimen was successfully measured with a thermocouple. Specifically, an electric heater (1.2 kW heater) was used as a heat source device, and K thermocouples and a temperature controller were connected. The respective thermocouples were connected to a data logger. The test specimen was fixed such that the distance between the heated surface side of the test specimen and the heat source was about 70 mm.
The test procedure was as follows.

(1) A dummy plate was placed, preheated to 902 °C, and then heated once.
(2) After the heated surface side reached 200 °C or lower, the dummy plate was replaced with a test specimen.
(3) The thermocouple was placed on the center of the back surface (upper surface in the figure) of the test specimen, and a calcium silicate plate (about 30 mm $\times$ 70 mm) and a weight were placed for fixing.
(4) Heating is started and left for a predetermined time (45 minutes), and the temperature on the front surface side and the back surface side is recorded in a data logger. During this period, the temperature of the electric heater was set to 902 °C on the heated surface side, and managed by the temperature controller with the lower limit of 900 °C. In addition, the temperature measurement interval of the data logger was set to every 10 seconds, and the data were recorded at this interval.
(5) After completion of the test, the test specimen was taken out, and the following items were measured (the items were also measured before the test).

- Dimensions: The longitudinal and lateral lengths of the back surface and the heated surface were measured with a caliper. The area ($mm^2$) of the heated surface before and after the test was calculated, and the heated surface shrinkage (%) was determined based on the following formula.

$$\text{Heated surface shrinkage (\%)} = \{|S_1 - S_0|/S_0\} \times 100$$

(wherein $S_0$ is the area of the heated surface before the test, and $S_1$ is the area of the heated surface after the test.)

- Warpage: The test specimen was placed on an iron surface plate, and the height of the central portion of each side of the test specimen from the iron surface plate was measured with a thickness gauge to take the average value (mm). The average value was defined as warpage (mm) after heating.
- Photographing of samples before and after test (photographs showing degree of cracking before and after heating)

[Table 2]

| | | Production Example 1-1 | Production Example 1-2 | Production Example 1-3 | Comparative Production Example 1-1 | Comparative Production Example 1-2 |
|---|---|---|---|---|---|---|
| Type of calcium-based carbonate compound | | Example 1-1 | Example 1-2 | Example 1-3 | Comparative Example 1-1 | - |
| Material | Cement | 27 | 27 | 27 | 27 | 27 |
| | Silica sand | 23 | 23 | 23 | 23 | 23 |
| | Pulp | 5 | 5 | 5 | 5 | 5 |
| | Wollastonite | 10 | 10 | 10 | 10 | 10 |
| | Calcium-based carbonate compound | 35 | 35 | 35 | 35 | - |
| Content of calcium-based carbonate compound | | 35% | 35% | 35% | 35% | - |
| Evaluation | Bulk density (g/cm$^3$) | 0.9 | 0.9 | 1.0 | 1.0 | 0.9 |
| | Heated surface shrinkage (%) | 0.5 | 0.3 | 1.0 | 1.5 | 3.3 |
| | Back surface temperature rise (K, 12 mm) | 450 | 430 | 454 | 465 | 503 |
| | Warpage after heating (mm) | 0.0 | 0.0 | 0.0 | 0.0 | 0.8 |

[Table 3]

| | | Comparative Production Example 1-2 | Production Example 1-4 | Production Example 1-5 | Production Example 1-1 | Production Example 1-6 | Production Example 1-7 | Production Example 1-2 | Production Example 1-8 | Production Example 1-9 | Production Example 1-3 | Production Example 1-10 |
|---|---|---|---|---|---|---|---|---|---|---|---|---|
| Type of calcium-based carbonate compound | | - | | | Example 1-1 | | | Example 1-2 | | | Example 1-3 | |
| Material | Cement | 27 | 27 | 27 | 27 | 27 | 27 | 27 | 27 | 27 | 27 | 27 |
| | Silica sand | 23 | 23 | 23 | 23 | 23 | 23 | 23 | 23 | 23 | 23 | 23 |
| | Pulp | 5 | 5 | 5 | 5 | 5 | 5 | 5 | 5 | 5 | 5 | 5 |
| | Wollastonite | 10 | 10 | 10 | 10 | 10 | 10 | 10 | 10 | 10 | 10 | 10 |
| | Calcium-based carbonate compound | - | 10 | 15 | 35 | | 60 | 35 | 60 | 10 | 35 | 60 |
| Content of calcium-based carbonate compound | | - | 10% | 15% | 35% | 50% | 60% | 35% | 60% | 10% | 35% | 60% |
| Evaluation | Bulk density (g/cm³) | 0.9 | 0.9 | 0.9 | 0.9 | 1.0 | 0.9 | 0.9 | 0.9 | 1.0 | 1.0 | 0.9 |
| | Heated surface shrinkage (%) | 3.3 | 1.6 | 1.0 | 0.5 | 0.2 | 0.0 | 0.3 | 0.0 | 2.0 | 1.0 | 0.6 |
| | Back surface temperature rise (K, 12 mm) | 503 | 475 | 470 | 450 | 431 | 423 | 430 | 350 | 473 | 454 | 449 |
| | Warpage after heating (mm) | 0.8 | 0.3 | 0.0 | 0.0 | 0.0 | 0.0 | 0.0 | 0.0 | 0.5 | 0.0 | 0.0 |

The inorganic molded bodies of Production Examples were superior to those of Comparative Production Examples in all of the shrinkage of the heated surface, the temperature increase at the back surface, and warpage after heating. In addition, the inorganic molded bodies of Production Examples were not cracked after heating (not shown).

[Production Example 2-1] Production of inorganic molded body by extrusion molding method

The materials shown in Table 4 below were charged into an omni mixer, and raw materials were dry-stirred for 3 minutes. As the calcium-based carbonate compound, the calcium-based carbonate compound of Example 1-1 was used. Next, water was added, followed by wet stirring for 2 minutes. The raw materials after the wet stirring were kneaded with an Ishikawa-toki's extruder, and then extrusion molded with the Ishikawa-toki's extruder. In this way, a molded body having a long side of 600 mm × a short side of 190 mm × a thickness of 13 mm was produced.

After the molded body was obtained, the molded body was charged into a thermo-hygrostat set at 60 °C/98% to undergo primary curing, and the pressure was further raised to 9 kgf for autoclave curing for 12 hours. Both surfaces of the molded body were polished with a sander to have a thickness of 12 mm, thereby producing an inorganic molded body.

[Production Example 2-2] Production of inorganic molded body by extrusion molding method

An inorganic molded body was obtained in the same manner as in Production Example 2-1 except that the calcium-based carbonate compound of Example 1-2 was used as the calcium-based carbonate compound.

[Production Example 2-3] Production of inorganic molded body by extrusion molding method

An inorganic molded body was obtained in the same manner as in Production Example 2-1 except that the calcium-based carbonate compound of Example 1-3 was used as the calcium-based carbonate compound.

[Comparative Production Example 2-1] Production of inorganic molded body by extrusion molding method

An inorganic molded body was obtained in the same manner as in Production Example 2-1 except that the calcium-based carbonate compound of Comparative Example 1-1 was used as the calcium-based carbonate compound.

[Comparative Production Example 2-2] Production of inorganic molded body by extrusion molding method

An inorganic molded body was obtained in the same manner as in Production Example 2-1 except that materials shown in Table 4 below were used and the calcium-based carbonate compound was not blended.

[Comparative Production Example 2-3] Production of inorganic molded body by extrusion molding method

An inorganic molded body was obtained in the same manner as in Production Example 2-1 except that a calcium-based carbonate compound having an aspect ratio of 25 was used as the calcium-based carbonate compound. However, the calcium-based carbonate compound was broken during molding and could not maintain the original shape, and therefore evaluation was not performed.

Evaluation of inorganic molded body

The inorganic molded bodies produced by an extrusion molding method in Production Examples and Comparative Production Examples were evaluated as follows. The results are shown in Table 4.

Bulk density

The bulk density was measured in accordance with JIS A 5430.

Three-point bending test

A three-point bending test was performed in accordance with JIS A 5430. The result was defined as the strength $(N/mm^2)$ of the inorganic cement-based molded body plate.

Heating test

Measurement was performed in the same manner as in the papermaking method.

[Table 4]

| | | Production Example 2-1 | Production Example 2-2 | Production Example 2-3 | Comparative Production Example 2-1 | Comparative Production Example 2-2 |
|---|---|---|---|---|---|---|
| Type of calcium-based carbonate compound | | Example 1-1 | Example 1-2 | Example 1-3 | Comparative Example 1-1 | - |
| Material | Cement | 30 | 30 | 30 | 30 | 30 |
| | Silica stone powder | 17 | 17 | 17 | 17 | 49 |
| | Wollastonite | 5 | 5 | 5 | 5 | - |
| | Pulp | 8 | 8 | 8 | 8 | 8 |
| | Methyl cellulose | 1 | 1 | 1 | 1 | 1 |
| | Fly ash balloon | 9 | 9 | 9 | 9 | 12 |
| | Calcium-based carbonate compound | 30 | 30 | 30 | 30 | 0 |
| Content of calcium-based carbonate compound | | 30% | 30% | 30% | 30% | - |
| Evaluation | Bulk density (g/cm$^3$) | 1.1 | 1.0 | 1.1 | 1.0 | 1.0 |
| | Strength (N/mm$^2$) | 11.6 | 11.3 | 10.2 | 8.9 | 10.1 |
| | Heated surface shrinkage (%) | 1.1 | 0.8 | 1.6 | 1.5 | 2.7 |
| | Back surface temperature rise (K, 12 mm) | 494 | 489 | 496 | 496 | 545 |
| | Warpage after heating (mm) | 0.5 | 0.0 | 0.8 | 1.4 | 5.6 |

The inorganic molded bodies of Production Examples were superior to those of Comparative Production Examples in all of the shrinkage of the heated surface and warpage after heating. In addition, the inorganic molded bodies of Production Examples were not cracked after heating (not shown).

**Claims**

1. A calcium-based carbonate compound for an inorganic molded body, the calcium-based carbonate compound comprising:

   a calcite-type crystal structure, an aragonite-type crystal structure, or a combination of the crystal structures;
   an aspect ratio of an average major diameter to an average minor diameter, the aspect ratio being 2 or more and 19 or less; and
   an oil absorption of 40 mL/100 g or more and 90 mL/100 g or less.

2. The calcium-based carbonate compound for an inorganic molded body according to claim 1,
   having an apparent specific gravity of 0.1 g/mL or more and 1.0 g/mL or less.

3. The calcium-based carbonate compound for an inorganic molded body according to claim 1,
   having a mesopore volume of 0.018 $mm^3$/g or more and 0.045 $mm^3$/g.

4. The calcium-based carbonate compound for an inorganic molded body according to claim 1,
   having an average particle diameter by a laser diffraction method of 1.1 $\mu$m or more and 12.5 $\mu$m or less.

5. The calcium-based carbonate compound for an inorganic molded body according to claim 1,
   having an average major diameter in scanning electron microscope observation of 0.5 $\mu$m or more and 25 $\mu$m or less.

6. The calcium-based carbonate compound for an inorganic molded body according to claim 1,
   having a BET specific surface area of 1 $m^2$/g or more and 10 $m^2$/g or less.

7. The calcium-based carbonate compound for an inorganic molded body according to claim 1,
   which is a synthetic calcium-based carbonate compound.

FIG. 1

FIG. 2

FIG. 3

S4700 15.0kV 14.7mm x2.00k SE(M)          20.0um

FIG. 4

S4700 15.0kV 13.6mm x2.00k SE(M)          20.0um

FIG. 5

Thermocouple (for measuring back surface temperature)

Thermocouple (for measuring heated surface temperature)

Refractory material

Calcium silicate plate/Weight

Test specimen

Heat source

## INTERNATIONAL SEARCH REPORT

| International application No. |
|---|
| **PCT/JP2024/027359** |

**A.    CLASSIFICATION OF SUBJECT MATTER**

*C01F 11/18*(2006.01)i; *C04B 14/28*(2006.01)i
FI:    C01F11/18 D; C01F11/18 C; C04B14/28

According to International Patent Classification (IPC) or to both national classification and IPC

**B.    FIELDS SEARCHED**

Minimum documentation searched (classification system followed by classification symbols)

C01F11/18; C04B14/28

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

CAplus/REGISTRY (STN)

**C.    DOCUMENTS CONSIDERED TO BE RELEVANT**

| Category* | Citation of document, with indication, where appropriate, of the relevant passages | Relevant to claim No. |
|---|---|---|
| X | CN 110627100 A (JIADE HUAMING TECHNOLOGY CO., LTD.) 31 December 2019 (2019-12-31)<br>examples 3-7, claims, paragraphs [0004]-[0020], fig. 7, 9, 11, 13, 15 | 1-2, 4-7 |
| X | WO 2021/029351 A1 (NIPPON PAPER INDUSTRIES CO., LTD.) 18 February 2021 (2021-02-18)<br>example 5, claims, paragraphs [0009]-[0014], table 1 | 1-2, 4-5, 7 |
| A | US 2001/0033820 A1 (YANIV ISAAC, Halfa) 25 October 2001 (2001-10-25)<br>entire text, all drawings | 1-7 |
| A | WO 2007/078017 A1 (KOREA INSTITUTE OF GEOSCIENCE AND MINERAL RESOURCES) 12 July 2007 (2007-07-12)<br>entire text, all drawings | 1-7 |
| A | JP 2000-302500 A (SEKISUI CHEMICAL CO., LTD.) 31 October 2000 (2000-10-31)<br>entire text, all drawings | 1-7 |

☑ Further documents are listed in the continuation of Box C.          ☑ See patent family annex.

| | |
|---|---|
| *    Special categories of cited documents:<br>"A"  document defining the general state of the art which is not considered to be of particular relevance<br>"D"  document cited by the applicant in the international application<br>"E"  earlier application or patent but published on or after the international filing date<br>"L"  document which may throw doubts on priority claim(s) or which is cited to establish the publication date of another citation or other special reason (as specified)<br>"O"  document referring to an oral disclosure, use, exhibition or other means<br>"P"  document published prior to the international filing date but later than the priority date claimed | "T"  later document published after the international filing date or priority date and not in conflict with the application but cited to understand the principle or theory underlying the invention<br>"X"  document of particular relevance; the claimed invention cannot be considered novel or cannot be considered to involve an inventive step when the document is taken alone<br>"Y"  document of particular relevance; the claimed invention cannot be considered to involve an inventive step when the document is combined with one or more other such documents, such combination being obvious to a person skilled in the art<br>"&"  document member of the same patent family |

| Date of the actual completion of the international search | Date of mailing of the international search report |
|---|---|
| **17 September 2024** | **01 October 2024** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (July 2022)

**INTERNATIONAL SEARCH REPORT**

| International application No. |
| --- |
| **PCT/JP2024/027359** |

## C. DOCUMENTS CONSIDERED TO BE RELEVANT

| Category* | Citation of document, with indication, where appropriate, of the relevant passages | Relevant to claim No. |
| --- | --- | --- |
| A | JP 2003-089569 A (KONOSHIMA CHEMICAL CO., LTD.) 28 March 2003 (2003-03-28) entire text, all drawings | 1-7 |
| E, X | JP 2024-108133 A (KONOSHIMA CHEMICAL CO., LTD.) 09 August 2024 (2024-08-09) comparative example 2 | 1-7 |

Form PCT/ISA/210 (second sheet) (July 2022)

## INTERNATIONAL SEARCH REPORT
### Information on patent family members

| International application No. |
|---|
| **PCT/JP2024/027359** |

| Patent document cited in search report | | | Publication date (day/month/year) | Patent family member(s) | | | Publication date (day/month/year) |
|---|---|---|---|---|---|---|---|
| CN | 110627100 | A | 31 December 2019 | (Family: none) | | | |
| WO | 2021/029351 | A1 | 18 February 2021 | (Family: none) | | | |
| US | 2001/0033820 | A1 | 25 October 2001 | US | 6685908 | B1 | |
| | | | | US | 2003/0180208 | A1 | |
| | | | | US | 2003/0213937 | A1 | |
| | | | | WO | 2001/066467 | A1 | |
| | | | | WO | 2001/066466 | A1 | |
| | | | | EP | 1280735 | A2 | |
| | | | | AU | 3593401 | A | |
| | | | | CA | 2401899 | A1 | |
| | | | | IL | 151510 | A | |
| | | | | CN | 1443136 | A | |
| | | | | AU | 3592501 | A | |
| WO | 2007/078017 | A1 | 12 July 2007 | KR | 10-0720865 | B1 | |
| | | | | CA | 2635233 | A | |
| JP | 2000-302500 | A | 31 October 2000 | (Family: none) | | | |
| JP | 2003-089569 | A | 28 March 2003 | (Family: none) | | | |
| JP | 2024-108133 | A | 09 August 2024 | WO | 2024/162124 | A1 | |
| | | | | comparative example 2 | | | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2012116685 A